## Europäisches Patentamt

## European Patent Office

## Office européen des brevets

(19)

(11) Veröffentlichungsnummer: **0 107 642
B1**

(12)

# EUROPÄISCHE PATENTSCHRIFT

(45) Veröffentlichungstag der Patentschrift:
04.12.85

(21) Anmeldenummer: 83890138.7

(22) Anmeldetag: 31.08.83

(51) Int. Cl.⁴: **B 21 F 27/10**

(54) Vielpunkt-Gitterschweissmaschine.

(30) Priorität: 22.10.82 AT 3889/82

(43) Veröffentlichungstag der Anmeldung:
02.05.84 Patentblatt 84/18

(45) Bekanntmachung des Hinweises auf die Patenterteilung:
04.12.85 Patentblatt 85/49

(84) Benannte Vertragsstaaten:
BE CH DE FR GB IT LI

(56) Entgegenhaltungen:
AT - B - 325 393

(73) Patentinhaber: EVG Entwicklungs- u. Verwertungs-Gesellschaft m.b.H., Vinzenz-Muchitsch-Strasse 36, A-8011 Graz (AT)

(72) Erfinder: Scherr, Rudolf, Dipl.-Ing., Ziegelstrasse 23, A-8045 Graz (AT)
Erfinder: Schmidt, Gerhard, Dipl.-Ing., Rosengasse 7, A-8042 Graz (AT)
Erfinder: Pollhammer, Edgar, Dipl.-Ing., Goethestrasse 50, A-8010 Graz (AT)
Erfinder: Ritter, Gerhard, Dipl.-Ing. Dr., Unterer Plattenweg 47, A-8043 Graz (AT)
Erfinder: Ritter, Klaus, Dipl.-Ing., Peterstalstrasse 157, A-8042 Graz (AT)

(74) Vertreter: Holzer, Walter, Dipl.-Ing. et al, Patentanwälte Dipl.-Ing. Dr.techn. Schütz Alfred Dr.phil. Mrazek Engelbert Dipl.-Ing. Holzer Walter Dipl.-Ing. Pfeifer Otto Fleischmanngasse 9, A-1040 Wien (AT)

## Beschreibung

Die Erfindung betrifft eine Vielpunkt-Gitterschweißmaschine mit einem im Schweißtakt auf- und abbewegbaren Elektrodentragbalken, an dem mit Hilfe von Führungsstangen eine Vielzahl von durch Anpreßfedern in Richtung zur Gitterschweißebene hin belasteten Elektrodeneinheiten verschiebbar geführt ist, wobei jede Elektrodeneinheit in einer zurückgezogenen Ruhestellung feststellbar ist.

Bei einer aus der AT-B-325 393 bekannten Vielpunkt-Gitterschweißmaschine dieser Gattung sind die Führungsstangen, mit welchen die Elektrodeneinheiten am Elektrodentragbalken verschiebbar geführt sind, mit Anschlägen versehen, die mit Verriegelungsstiften zusammenwirken. Wenn sich der Elektrodentragbalken in seiner tiefsten Stellung befindet, in welcher die Elektrodenanpreßfedern auf ihre geringste betriebsmäßige Länge zusammengedrückt sind, können die Führungsstangen ausgewählter Elektroden durch manuelle Krafteinwirkung unter weiterer Zusammendrückung der Elektrodenanpreßfedern etwas angehoben und die zugeordneten Verriegelungsstifte so weit unter die Anschläge an diesen Führungsstangen vorgeschoben werden, daß beim späteren Anheben des Elektrodentragbalkens ein Entspannen der betreffenden Anpreßfedern verhindert wird. Die ausgewählten Elektroden bleiben dann relativ zum Elektrodentragbalken in einer angehobenen Ruhestellung verriegelt und können bei neuerlichem Absenken des Elektrodentragbalkens mit dem Schweißgut nicht in Berührung gelangen.

Auf diese Weise ist es möglich, aus der Vielzahl vorhandener Elektroden ausgewählte Elektroden vom Schweißvorgang auszuschließen, etwa dann, wenn Gitter hergestellt werden sollen, deren Längsdrahtabstände ein ganzzahliges Vielfaches eines kleinsten Längsdrahtabstandes, d. h. einer Grundteilung, betragen sollen.

Bei der bekannten Maschine ist das Umstellen der Elektroden von der Grundteilung auf ein Vielfaches derselben durch Verriegeln der beim Schweißen mit der größeren Teilung nicht benötigten Elektrode in angehobener Ruhestellung nur während des Maschinenstillstandes und nur von Hand möglich, wobei sich der Elektrodentragbalken überdies in seiner tiefsten Stellung befinden muß. Der Umstellvorgang ist auch deshalb zeitaufwendig, weil der Maschinenführer, längs des Elektrodentragbalkens fortschreitend, an allen auszuschließenden Elektroden der Reihe nach die Verriegelungsstifte in ihre Wirkstellung einrasten muß. Dabei ist ein Betätigen der Verriegelungsstifte kaum möglich, wenn sich ein Gitter in der Maschine befindet, weil der Maschinenführer in diesem Falle nicht an jene Verriegelungsstifte heranreichen kann, die sich längs des Elektrodentragbalkens in mehr als einer Armlänge Abstand vom Gitterrand befinden. Schließlich muß vor dem Verriegeln einer Elektrode deren Führungsstange gegen die gesamte und erhebliche Kraft der zugeordneten Anpreßfeder etwas angehoben werden, um den Verriegelungsstift bringen zu können.

Die Erfindung befaßt sich nun mit der Aufgabe, eine Vielpunkt-Gitterschweißmaschine der einleitend angegebenen Gattung so auszubilden, daß ihre Elektrodeneinheiten (die durch Einzelelektroden für die Einzelpunktschweißung oder durch Elektrodenpaare für die Doppelpunktschweißung samt zugehörigen Elektrodenhaltern gebildet sein können) auch während des Betriebes der Maschine selektiv aus einer Arbeitsstellung, in der sie am Schweißvorgang teilnehmen, in eine Ruhestellung gebracht werden können, in der sie am Schweißvorgang nicht beteiligt sind, ohne daß ein dabei zusätzliches Spannen der sehr kräftigen Elektrodenanpreßfedern notwendig ist, bzw. auch umgekehrt aus der Ruhestellung in die Arbeitsstellung gebracht werden können.

Diese Aufgabe ist bei einer erfindungsgemäßen Vielpunkt-Schweißmaschine dadurch gelöst, daß die Elektrodeneinheiten unter der Wirkung von Rückstellfedern stehen, die wesentlich schwächer als die Anpreßfedern sind und die Tendenz haben, die zugeordneten Elektrodeneinheiten aus der vorgeschobenen Arbeitsstellung in die näher dem Elektrodentragbalken liegende zurückgezogene Ruhestellung zu verschieben, und daß Einrichtungen zum Vorschieben ausgewählter Elektrodeneinheiten in die Arbeitsstellung unter Überwindung der Kraft der Rückstellfedern vorgesehen sind.

Weitere Merkmale der Erfindung ergeben sich aus der nachfolgenden Beschreibung von Ausführungsbeispielen anhand der Zeichnungen. In diesen zeigen:

Fig. 1 in Ansicht den oberen, den Elektrodentragbalken enthaltenden Teil einer erfindungsgemäßen Gitterschweißmaschine;

Fig. 2 in Draufsicht zwei Arbeitszylinder, die bei der Maschine nach Fig. 1 zur Verstellung benachbarter Elektrodeneinheiten dienen;

Fig. 3 in Seitenansicht den Elektrodentragbalken eines zweiten Ausführungsbeispiels der Erfindung;

Fig. 4 das Schema einer hydraulischen Steuereinrichtung für die Ausführungsbeispiele nach den Fig. 1 und 3; die

Fig. 5 und 6 in ähnlicher wie die Fig. 3 und 4 den Elektrodentragbalken eines dritten Ausführungsbeispiels der Erfindung bzw. das Schema einer hierfür geeigneten hydraulischen Steuereinrichtung.

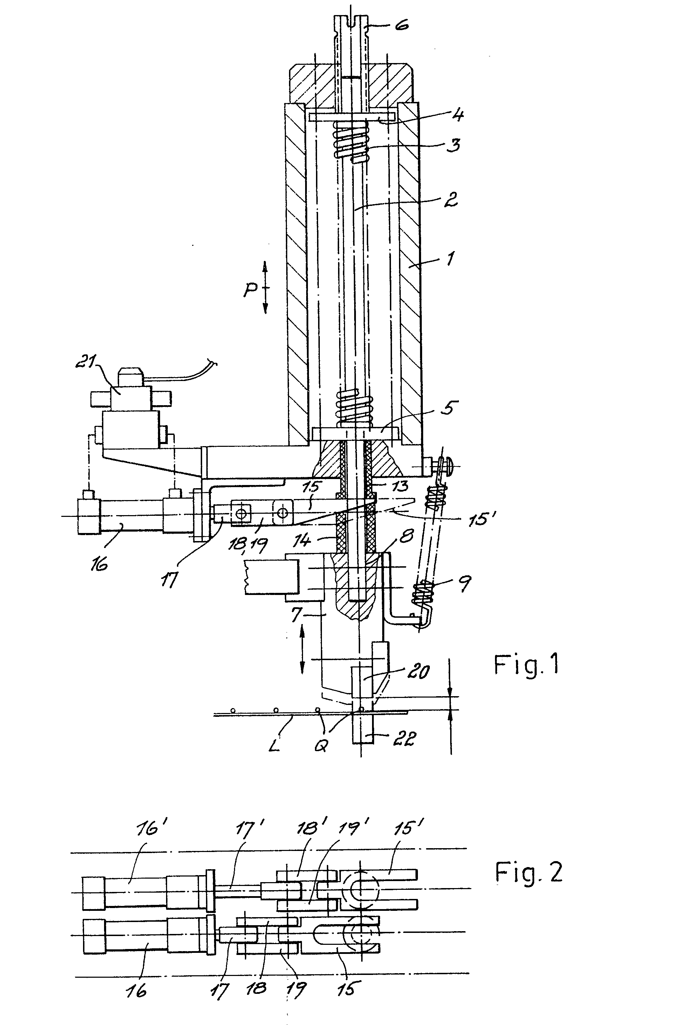

In einem in bekannter Weise als Kastenträger ausgebildeten Elektrodentragbalken 1 einer Gitterschweißmaschine ist in einer Flucht eine Vielzahl von Führungsstangen 2 angeordnet. Jede Führungsstange 2 ist von einer Schraubenfeder 3 umgeben, die sich gegen einen oberen Federteller 4 und einen unteren Federteller 5 abstützt. In der Ausführungsform nach den Fig. 1 und 2 ist die Führungsstange 2 gegenüber beiden Federtellern 4 und 5 frei verschiebbar.

Jeder obere Federteller 4 ist durch eine Gewindehülse 6, die in die Deckplatte des Tragbalkens 1 einschraubbar ist und das obere Ende der Führungsstange 2 koaxial umgibt, in seiner Höhenlage innerhalb des Tragbalkens 1 verstellbar. Dadurch ist es möglich, die Vorspanung der als Anpreßfeder für die Schweißelektroden dienenden Schraubenfedern 3 in Grenzen zu verändern.

Das untere Ende jeder Führungsstange 2 ist in einer Bohrung 8 einere Elektrodeneinheit 7 befestigt. Eine Rückstellfeder 9 belastet die Elektrodeneinheit 7 in Richtung zum Tragbalken 1. Zwischen der Elektrodeneinheit 7 und dem Federteller 5 sind zwei die Führungsstange 2 koaxial umgebende, relativ zueinander und zur Führungsstange 2 verschiebbare Hülsen 13 und 14 vorgesehen. Die Hülse 13 stützt sich mit ihrer oberen, ringförmigen Fläche gegen den Federteller 5, die Hülse 14 mit ihrer unteren, ringförmigen Fläche gegen die Elektrodeneinheit 7 ab. Zwischen die beiden einander zugekehrten, ringförmigen Flächen der Hülsen 13 und 14 greift ein die Führungsstange 2 gabelartig umschließender Keil 15 ein, der mittels zweier Verbindungslaschen 18, 19, die gelenkig mit dem Keil 15 und mit der Kolbenstange 17 eines Arbeitszylinders 16 verbunden sind, von diesem Arbeitszylinder zwischen der in Fig. 1 in vollem Strich gezeichneten Stellung und der in der gleichen Figur strichpunktiert gezeichneten Stellung verschiebbar ist. Die in Fig. 1 in vollem Strich gezeichnete Stellung entspricht in Fig. 2 der Stellung der mit dem Bezugszeichen 15—19 versehenen Elemente, während die in Fig. 1 strichpunktiert gezeichnete Stellung in Fig. 2 der Stellung der mit dem Bezugszeichen 15'—19' versehenen Nachbarelemente entspricht.

Durch Vorschieben des Keiles 15 in die Stellung, welche der Keil 15' einnimmt, wird der Abstand der einander zugekehrten ringförmigen Flächen der Hülsen 13 und 14 vergrößert, so daß die Elektrodeneinheit 7 aus ihrer dem Tragbalken 1 nahen Ruhestellung in eine vom Tragbalken 1 weiter entfernte Arbeitsstellung verschoben wird. Die mit der Elektrodeneinheit 7 fest verbundene Führungsstange 2 folgt dieser Bewegung, wobei sie sich relativ zu den Teilen 3, 4, 5, 6 und 9 bewegt. Lediglich die Spannung der Rückstellfeder 9 wird bei dieser Bewegung vergrößert. Die Spannung der im Vergleich zur Schraubenfeder 3 schwachen Rückstellfeder 9 ist die einzige Kraft, die beim Vorschieben der Elektrodeneinheit 7 aus der Ruhe- in die Arbeitsstellung überwunden werden muß.

Die Elektroden 20 jener Elektrodeneinheiten 7, die sich in der dem Tragbalken 1 nahe Ruhestellung befinden, können auch in der dem herzustellenden Gitter nächsten Stellung des Tragbalkens 1 nicht zur Anlage an die Querdrähte Q eines aus diesen Querdrähten und aus Längsdrähten L gebildeten und im Schweißbereich an Gegenelektroden 22 abgestützten Gitters gelangen. Die in der dem Tragbalken 1 entfernten Arbeitsstellung befindlichen Elektroden 20 setzen hingegen beim Absenken des in Richtung des Doppelpfeiles P bewegbaren Tragbalkens 1 auf die Querdrähte Q auf, worauf beim weiteren Absenken des Tragbalkens 1 die Schraubenfedern 3 gespannt werden und den nötigen Schweißdruck aufbringen. Die zum Spannen der Schraubenfedern 3 erforderliche, erhebliche Kraft wird von jeder Elektrodeneinheit 7 über die Hülse 14 auf den Keil 15 und von diesem über die Hülse 13 und den Federteller 5 auf die Schraubenfeder 3 übertragen.

Durch die gelenkigen Verbindungslaschen 18 und 19 wird gewährleistet, daß das Einfedern der Elektrodeneinheiten 7 und ihrer Führungsstange 2 beim Absenken des Elektrodentragbalkens 1 nach dem Aufsetzen der Elektroden 20 auf die Drahtkreuzungspunkte durch die Keile 15 nicht behindert wird.

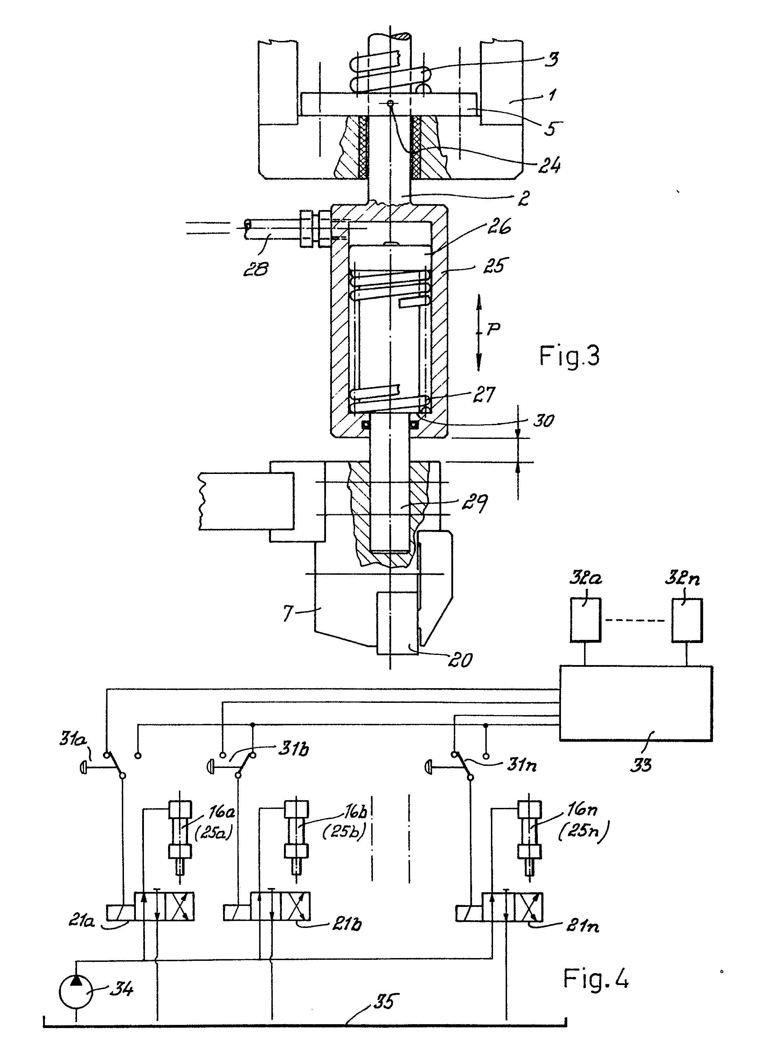

Während beim Ausführungsbeispiel nach den Fig. 1 und 2 die Elektrodeneinheiten 7 zusammen mit den Führungsstangen 2 gegenüber der Schraubenfeder 3, dem Federteller 5 und dem Tragbalken 1 verschiebbar sind, beruht das in Fig. 3 dargestellte zweite Ausführungsbeispiel auf einer teleskopartigen Verlängerbarkeit der Führungsstange 2.

Zu diesem Zweck ist am unteren Ende der Führungsstange 2, die in diesem Falle durch einen Bolzen 24 starr mit dem Federteller 5 verbunden ist, ein Arbeitszylinder 25 vorgesehen, in dem ein von einer Rückstellfeder 27 in Richtung auf seine dem Tragbalken 1 nahe Ruhestellung belasteter Kolben 26 gleitfähig geführt ist.

Über eine Leitung 28 kann dem Zylinder 25 Druckflüssigkeit zugeführt werden bzw. der Zylinder mit einem Flüssigkeitstank verbunden und damit der Druck im Zylinder auf Null reduziert werden.

Die Elektrodeneinheit 7 ist an der Kolbenstange 29 des Kolbens 26 befestigt. Im Inneren des Zylinders 25 bildet diese Kolbenstange eine Schulter 30, durch welche der Kolbenhub begrenzt wird.

Wird der Kolben 26 mit Druckflüssigkeit beaufschlagt und anschließend die Druckmittelzufuhr gesperrt, dann wird die im Vergleich zur Schraubenfeder 3 wieder schwache Rückstellfeder 27 zusammengedrückt und die Elektrodeneinheit 7 in die vom Tragbalken 1 entfernte Arbeitsstellung vorgeschoben. Die im Zylinderkopf eingeschlossene Druckflüssigkeit wirkt nun als unzusammendrückbares Übertragungsmedium, durch welches beim Absenken des Tragbalkens 1 der Druck von der Elektrodeneinheit 7 auf die Führungsstange 2 und den mit diesem starr verbundenen Federteller 5 übertragbar wird, wodurch die Schraubenfeder 3 gespannt wird.

In beiden beschriebenen Ausführungsbeispielen wird die Druckbeaufschlagung der Arbeitszylinder 16 bzw. 25 gemäß Fig. 4 für die einzelnen Elektrodeneinheiten 7 vorteilhaft durch elektromagnetisch betätigbare Ventile 21 gesteuert. Eine geeignete Steuerschaltung ist in Fig. 4 dargestellt, wobei die beispielsweise zu n verschiedenen Elektrodeneinheiten gehörenden Teile der Steuerkreise durch die Indices a, b ... n voneinander unterschieden sind. Die Zylinder 16a, 16b . . . 16n (oder 25a, 25b, . . . 25n) können selektiv entweder über handbetätigte Schalter 31a, 31b . . . 31n oder über ein durch Tastensätze 32a, 32b . . . 32n voreinstellbares Programmiergerät 33 durch Erregung bzw. Aberregung zugeordneter Magnetventile 21a, 21b . . . 21n entweder von einer Pumpe 34 mit Druckflüssigkeit versorgt oder durch Verbindung mit einem Flüssigkeitstank 35 drucklos gemacht werden.

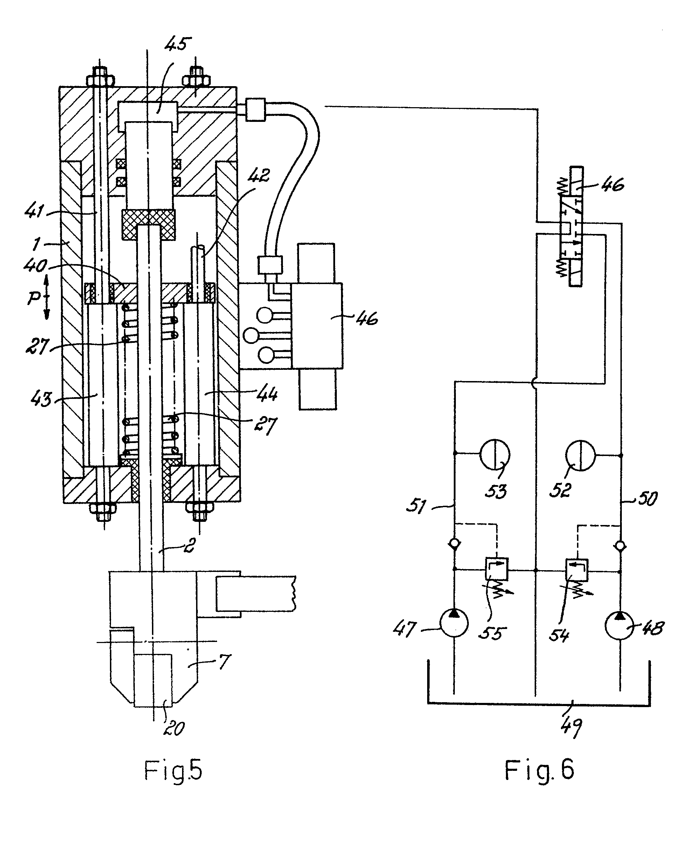

Beim Ausführungsbeispiel nach Fig. 5 ist mit jeder Führungsstange 2 fest ein Federteller 40 verbunden, der von zwei Führungsstangen 41 und 42 innerhalb des Elektrodentragbalkens 1 gleitfähig geführt wird. Die unteren Teile der Führungsstangen 41, 42 sind von Hülsen 43, 44 umgeben, welche die Abwärtsbewegung des Federtellers 40 begrenzende Anschläge bilden. Eine Rückstellfeder 27 belastet den Federteller 40 in Richtung nach oben. Die Führungsstange 2 wird durch die Kolbenstange eines als Anpreßfeder dienenden Arbeitszylinders 45 gebildet, der über einen elektromagnetisch gesteuerten Schieber 46 mit Druckmittel beaufschlagbar ist.

Für diese Beaufschlagung sind gemäß Fig. 6 zwei Pumpen 47, 48 vorgesehen, die aus einem Druckflüssigkeitstank 49 Flüssigkeit in Leitungen 50, 51 fördern, wobei mit diesen Leitungen 50, 51 Windkessel 52, 53 kommunizieren. Die Drücke in beiden Leitungen sind unterschiedlich groß und werden durch Druckregelventile 54, 55 konstant gehalten.

Wird über den Schieber 46 der Arbeitszylinder 45 beispielsweise mit der Leitung 51 verbunden, so wird der Kolben im Zylinder 45 gegen die Wirkung der Rückstellfeder 27 so weit nach unten geschoben, bis der Federteller 40 zur Anlage an den Hülsen 43, 44 gelangt. Die Elektrodeneinheit 7 befindet sich dann in ihrer Arbeitsstellung.

Setzt bei der Abwärtsbewegung des Elektrodentragbalkens 1 die Elektrode 20 auf das Schweißgut auf, so wird die Führungsstange 2 gegen die Wirkung des Arbeitszylinders 45 nach oben geschoben, wobei Flüssigkeit aus dem Arbeitszylinder 45 in den Windkessel 53 verdrängt wird. Der Druck auf das Schweißgut bleibt daher während des ganzen Anpreßvorganges konstant und gleich dem mit dem Kolbenquerschnitt vervielfachten Leitungsdruck.

Wird der Schieber 46 in die in Fig. 6 dargestellte Stellung zurückgeschaltet, so wird der Arbeitszylinder 45 mit dem Druckflüssigkeitstank 49 verbunden und damit druckentlastet, und die Rückstellfeder 27 bringt die Elektrodeneinheit 7 zurück in ihre Ruhestellung.

Dadurch, daß zwei Druckleitungen 50 und 51 mit unterschiedlichen Drücken vorgesehen sind, kann bei diesem Ausführungsbeispiel der Erfindung jede Elektrode mit einem von zwei wählbaren Drücken beaufschlagt werden. Es können daher bei Schweißmaschinen, mit welchen Gitter geschweißt werden sollen, die aus Längsdrähten mit unterschiedlichen Drahtdurchmessern aufgebaut sind (z. B. Randsparmatten), längs der Schweißlinie zwei unterschiedliche Elektrodendrücke zur Verfügung gestellt werden.

Zwei unterschiedliche Drücke längs der Schweißlinie können übrigens beim Ausführungsbeispiel nach Fig. 3 mit nur einer mit einem Windkessel versehenen Speiseleitung erzielt werden. Wird nämlich in Fig. 3 der Kolben 26 mit Druckflüssigkeit beaufschlagt und nach Vorschieben der Elektrodeneinheit 7 in die Arbeitsstellung die Verbindung zur Speiseleitung, z. B. durch einen Magnetschieber, unterbrochen, dann wird über die im Zylinder 25 eingeschlossene unzusammendrückbare Druckflüssigkeit der gesamte Schweißdruck auf die Schraubenfeder 3 übertragen. Wird andererseits während des Schweißvorganges die Leitung 28 durch den Magnetschieber in Verbindung mit einem Windkessel gehalten, so kann der Kolben 26 im Zylinder 25 verschoben werden, vorausgesetzt, der Druck in der Leitung 28 wird so bemessen, daß die von der Druckflüssigkeit auf den Kolben 26 ausgeübte Kraft kleiner als die Federkraft der Schraubenfeder 3 ist. Die die Elektrode 20 gegen das Schweißgut andrückende Kraft ist unter dieser Voraussetzung im zweiten Falle geringer als im ersten.

Die beschriebenen Ausführungsbeispiele lassen im Rahmen der Erfindung, wie sie in den Patentansprüchen definiert ist, verschiedene dem Fachmann leicht ersichtliche konstruktive Abwandlungen zu. Statt hydraulischer Arbeits- und Steuerkreise können u. U. auch pneumatische Anwendung finden.

## Patentansprüche

1. Vielpunkt-Gitterschweißmaschine mit einem im Schweißtakt auf- und abbewegbaren Elektrodentragbalken (1), an dem mit Hilfe von Führungsstangen (2) eine Vielzahl von durch Anpreßfedern (3; 45) in Richtung zur Gitterschweißebene hin belasteten Elektrodeneinheiten (7) verschiebbar geführt ist, wobei jede Elektrodeneinheit (7) in einer zurückgezogenen Ruhestellung feststellbar ist, dadurch gekennzeichnet, daß die Elektrodeneinheiten (7) unter der Wirkung von Rückstellfedern (9; 27) stehen, die wesentlich schwächer als die Anpreßfedern (3; 45) sind und die Tendenz haben, die zugeordneten Elektrodeneinheiten (7) aus der vorgeschobenen Arbeitsstellung in die näher dem Elektrodentragbalken (1) liegende, zurückgezogene Ruhestellung zu verschieben, und daß Einrichtungen (13—19; 23, 26, 29; 45) zum Vorschieben ausgewählter Elektrodeneinheiten (7) in die Arbeitsstellung unter Überwindung der Kraft der Rückstellfedern (9; 27) vorgesehen sind.

2. Gitterschweißmaschine nach Anspruch 1, dadurch gekennzeichnet, daß jede Elektrodeneinheit (7) am vorderen Ende ihrer Führungsstange (2) befestigt ist und die Führungsstange (2) von zwei relativ zu ihr und zueinander verschiebbaren Hülsen (13, 14) umgeben ist, wobei sich eine (13) dieser Hülsen an einem Federteller (5) der zugeordneten Anpreßfeder (3) und die andere (14) an der Elektrodeneinheit (7) abstützt, und daß zwischen den einander zugekehrten, ringförmigen Stirnflächen der beiden Hülsen (13, 14) ein die Führungsstange (2) vorzugsweise gabelförmig umschließender Keil (15) vorgesehen ist, der, z. B. von der Kolbenstange (17) eines Arbeitszylinders (16), zwischen einer Stellung, in der die einander zugekehrten, ringförmigen Stirnflächen der Hülsen (13, 14) geringeren Abstand voneinander haben, und einer Stellung, in der diese Stirnflächen größeren Abstand voneinander haben, verstellbar ist (Fig. 1 und 2).

3. Gitterschweißmaschine nach Anspruch 1, dadurch gekennzeichnet, daß für jede Elektrodeneinheit (7) im Endteil der ihr zugeordneten Führungsstange (2) ein Arbeitszylinder (25) vorgesehen ist, in dem ein von der Rückstellfeder (27) belasteter, über eine Leitung (28) mit einem vorzugsweise hydraulischen Druckmedium beaufschlagbarer bzw. vom Druckmedium entlastbarer Kolben (26) verschiebbar geführt ist, wobei die Elektrodeneinheit (7) an der Kolbenstange (29) des Kolbens (26) befestigt ist (Fig. 3).

4. Gitterschweißmaschine nach einem der Ansprüche 1 bis 3, dadurch gekennzeichnet, daß zur Steuerung der Beaufschlagung einer der Anzahl (n) der Elektrodeneinheiten (7) entsprechenden Vielzahl von Arbeitszylindern (16a—16n; 25a—25n) mit einem vorzugsweise hydraulischen Druckmedium Magnetventile (21a—21n) vorgesehen sind, die mittels Handschalter (31a—31n) oder durch ein Programmiergerät (33) selektiv erregbar sind.

5. Gitterschweißmaschine nach Anspruch 1, dadurch gekennzeichnet, daß jede Elektrodeneinheit (7) am vorderen Ende ihrer Führungsstange (2) befestigt ist und daß als Anpreßfeder ein mit dem Elektrodentragbalken (1) verbundener Arbeitszylinder (45) vorgesehen ist, dessen Kolben mit dem hinteren Ende der Führungsstange (2) verbunden und durch Druckbeaufschlagung des Arbeitszylinders gegen die Wirkung einer die Führungsstange umgebenden Rückstellfeder (27) in eine durch Anschläge (40, 43, 44) begrenzte, vorgeschobene Stellung verschiebbar ist, welche der Arbeitsstellung der Elektrodeneinheit (7) entspricht, bzw. durch Druckentlastung des Arbeitszylinders (45) durch die Rückstellfeder (27) in eine der Ruhestellung der Elektrodeneinheit (7) entsprechende Stellung zurückstellbar ist.

6. Gitterschweißmaschine nach Anspruch 5, dadurch gekennzeichnet, daß für jeden Arbeitszylinder (45) zumindest ein z. B. durch ein Magnetventil (46) ein- und ausschaltbarer, vorzugsweise hydraulischer Speisekreis (47, 51, 53, 46) vorgesehen ist, in dem sich ein Windkessel (53) befindet.

**Claims**

1. A multispot grid-welding machine having an electrode-carrier beam (1) movalbe up and down in the welding cycle, a plurality of electrode units (7) slidably guided on said beam by means of guide rods (2), and pressure-springs (3; 45) biasing said electrode units in the direction toward the grid-welding plane, each electrode (7) being lockable in a retracted rest position, characterized in that said electrode units (7) are acted upon by return springs (9; 27) which are considerably weaker than said pressure-springs (3; 45) and tend to shift the respective electrode units (7) from an advanced working position into said retracted rest position nearer said electrode-carrier beam (1), and in that means (13—19; 25, 26, 29; 45) are provided for advancing selected ones of said electrode units (7) into said working position by overcoming the force of said return spring (9; 27).

2. A grid-welding machine according to claim 1, characterized in that each said electrode unit (7) is attached to the front end of its respective guide rod (2) and the guide rod (2) is surrounded by two sleeves (13, 14), said sleeves being shiftable relative to its guide rod and to one another, one (13) of said sleeves bearing against a spring plate (5) of the respective pressure-spring (3) and the other (14) of said sleeves bearing against the electrode unit (7), and in that a wedge (15) is provided between the facing annular front faces of the two sleeves (13, 14), said wedge surrounding said guide rod (2), preferably in fork-like manner, and being adjustable, e. g. by a piston rod (17) of a working cylinder (16), between a first position in which the facing annular front faces of the sleeves (13, 14) are a smaller distance apart, and a position in which said front faces are a greater distance apart (Fig. 1 and 2).

3. A grid-welding machine according to claim 1, characterized in that a working cylinder (25) is provided for each electrode unit (7) at the end portion of its respective guide rod (2), said cylinder having a piston (26) slidable therein and acted upon by said return spring (27) and actuated via a pipe (28) by a preferably hydraulic pressure medium or relieved of said pressure medium, the electrode unit (7) being attached to the piston rod (29) of said piston (26) (Fig. 3).

4. A grid-welding machine according to one of the claims 1 to 3, characterized in that solenoid valves (21a—21n) are provided for controlling the supply of a preferably hydraulic pressure medium to a number (n) of working cyclinders (16a—16n; 25a—25n) corresponding to the plurality of electrode units (7), said valves being selectively energizable by manual switches (31a—31n) or by a programming apparatus (33).

5. A grid-welding machine according to claim 1, wherein each electrode unit (7) is attached to the front end of its respective guide rod (2) and in that a working cylinder (45) connected to said electrode-carrier beam (1) is provided as pressure-spring, said cylinder having a piston connected to the rear end of said guide rod (2) and shiftable against the action of the return spring (27) surrounding the guide rod into an advanced position by pressurizing said working cylinder, which advanced position is defined by stops (40, 43, 44) and corresponds with the working position of the electrode unit (7), or retractable into a position corresponding to the rest position of the electrode unit (7) under the action of the return spring (27) upon relieving said operating cylinder (45) of pressure.

6. A grid-welding machine according to claim 5, characterized in that at least one pressurizing circuit (47, 51, 53, 46), preferably a hydraulic circuit, is provided for each working cylinder (45), said circuit being switchable e. g. by a solenoid valve (46), and includes an expansion chamber (53).

**Revendications**

1. Soudeuse de treillis par points comportant une poutre porte-électrodes (1) pouvant être soulevée et abaissée au rythme des opérations de soudage et sur laquelle plusieurs unités d'électrodes (7) sollicitées en direction du plan de soudage du treillis par des ressorts de pression (3; 45) sont guidées à coulissement au moyen de tiges de guidage (2), chaque unité d'électrode (7) pouvant être fixée dans une position de repos rétractée, caractérisée en ce que les unités d'électrodes (7) sont sollicitées par des ressorts de rappel (9; 27) qui sont nettement plus faibles que les ressorts de pression (3; 45) et qui ont tendance à déplacer les unités d'électrodes (7) associées à partir de la position de travail avancée dans la position rétractée située plus près de la poutre porteélectrodes (1), et des dispositifs (13 à 19; 25, 26, 29; 45) sont prévus pour faire avancer des unités d'électrodes (7) sélectionnées dans la position de travail à l'encontre de la sollicitation des ressorts de rappel (9; 27).

2. Soudeuse de treillis suivant la revendication 1, caractérisée en ce que chaque unité d'électrode (7) est fixée sur l'extrémité antérieure de sa tige de guidage (2) et la tige de guidage (2) est entourée par deux douilles (13, 14) pouvant coulisser par rapport à cette tige ainsi que l'une par rapport à l'autre, une (13) de ces douilles prenant appui sur une coupelle de ressort (5) du ressort de pression (3) associé et l'autre douille (14) prenant appui sur l'unité d'électrode (7), et entre les faces d'about annulaires tournées l'une vers l'autre des deux douilles (13, 14), étant prévue une clavette (15) entourant la tige de guidage (2) de préférence à la manière d'une fourche qui peut être déplacée (Fig. 1 et 2), par exemple par la tige de piston (17) d'un vérin (16) entre une position dans laquelle les faces d'about annulaires tournées l'une vers l'autre des douilles (13 et 14) sont espacées d'une distance réduite et une position dans laquelle ces faces d'about sont espacées d'une distance accrue.

3. Soudeuse de treillis suivant la revendication 1, caractérisée en ce que pour chaque unité d'électrodes (7), un vérin (25) est prévu dans la partie d'extrémité de la tige de guidage (2) qui y est associée et dans ce vérin est guidé à coulissement un piston (26) rappelé par le ressort de rappel (27) et pouvant, par l'intermédiaire d'une conduite 28, être sollicité par un agent sous pression de préférence hydraulique ou être débarrassé de cet agent sous pression, l'unité d'électrodes (7) étant fixée à la tige de piston (29) du piston (26) (Fig. 3).

4. Soudeuse de treillis suivant l'une quelconque des revendications 1 à 3, caractérisée en ce que pour commander la sollicitation, un nombre de vérins (16a—16n; 25a—25n) correspondant au nombre (n) des unités d'électrodes (7) est prévu, ces vérins étant équipés d'une électrovalve (21a à 21n) destinée à un agent sous pression de préférence hydraulique, ces électrovalves pouvant être excitées sélectivement au moyen de commutateurs à main (31a à 31n) ou d'un appareil programmateur (33).

5. Soudeuse de treillis suivant la revendication 1, caractérisée en ce que chaque unité d'électrode (7) est fixée sur l'extrémité antérieure de sa tige de guidage (2) et à titre de ressort de pression est prévu un vérin (45) relié à la poutre porte-électrodes (1), le piston du vérin étant relié à l'extrémité postérieure de la tige de guidage (2) et pouvant être déplacé, sous l'effet d'une admission de pression dans le vérin, à l'encontre de la sollicitation d'un ressort de rappel entourant la tige de guidage, dans une position avancée limitée par des butées (40, 43, 44) qui correspond à la position de travail de l'unité d'électrode (7), ou pouvant être ramené dans une position correspondant à la position de repos de l'unité d'électrode (7) par la décompression du vérin (45) à l'intervention du ressort de rappel (27).

6. Soudeuse de treillis suivant la revendication 5, caractérisée en ce qu'au moins un circuit d'alimentation de préférence hydraulique (47, 51, 53, 56) pouvant être enclenché et déclenché par exemple par une électrovalve (46) est prévu et contient un réservoir d'air (53).

Fig. 1

Fig. 2

Fig.3

Fig.4

Fig 5

Fig. 6